# EUROPEAN PATENT APPLICATION

(11) **EP 4 818 136 A1**
(43) Date of publication of application: **07.10.2026**
(21) Application number: 25167551.8
(22) Date of filing: 31.03.2025
(51) Int. Cl.: C04B 20/02, C04B 28/02

(54) **CARBONATED CEMENTITIOUS POWDER AND METHOD OF PREPARATION THEREOF**

(71) Applicant: Etex Services NV, 1880 Kapelle-op-den-Bos (BE)
(72) Inventor: GIJBELS, Katrijn, 3530 Houthalen (BE)
(74) Representative: Etex Services NV - Etex IPSC

(57) **Abstract**

The carbonated cementitious powder is obtained from waste material, such as fiber cement waste material. The carbonated cementitious powder comprising calcium carbonate and amorphous aluminosilica gel, wherein said calcium carbonate is present in at least three phases being amorphous calcium carbonate, vaterite and calcite. The amorphous calcium carbonate is present in an amount of 20% to 50% by weight of total calcium carbonate. The vaterite is present in an amount of 30% to 50% by weight of total calcium carbonate.

## Description

### FIELD OF THE INVENTION

The invention relates to a carbonated cementitious powder obtained from waste material, said carbonated cementitious powder comprising calcium carbonate and amorphous aluminosilica gel. The invention further relates to a method of preparation of such a carbonated cementitious powder from milled or ground cementitious waste material, and to the use of such carbonated cementitious powder.

### BACKGROUND OF THE INVENTION

Carbonated cementitious powder has been proposed quite recently, as a way to reuse cementitious waste material, in which simultaneously less raw materials will be needed for cement production and less carbon dioxide is generated, due to avoidance of primary raw materials and of CO2 sequestration by the cementitious powder during carbonation. As explained in several patent applications such as WO2023/046498A1 and WO2020239683A1, as well as in several scientific publications, carbonation of recycled cement e paste from concrete recycling, results in formation of an aluminosilica gel in addition to calcium carbonate. The amorphous aluminosilica gel has pozzolanic properties or is a pozzolanic material, which means that it can be used as a supplementary cementitious material so as to contribute to the mechanical strength of a resulting cementitious product, such as mortar, concrete and the like. Since carbon dioxide is needed to perform carbonation, total carbon dioxide emissions from an industrial plant such as a cement manufacturing plant, will sink without a corresponding decrease in output volume.

Scientifically, carbonated cementitious powder is an interesting material as it combines at least two ingredients that are quite different; the first one is the aluminosilica gel and the second one is calcium carbonate. It appears that the most of the aluminosilica gel may be located within an inner core of an individual carbonated particle, whereas the calcium carbonate is mostly located at an outer surface of the carbonated particle. As observed by the present inventor, such a structure is obtained when performing carbonation according to a semi-dry method. Calcium carbonate is usually present in its calcite form, although other forms such as vaterite, aragonite as well as amorphous calcium carbonate are known per se. As is indicated in J. Huang et al, Composites Part B 297 (2025), 112336, three main polymorphs of calcium carbonate can be observed in carbonated recycled concrete paste, which are calcite, aragonite and vaterite. Amorphous calcium carbonate is a precursor. The amorphous calcium carbonate rapidly transforms into calcite and aragonite crystals within a few minutes when exposed to an aqueous solution. However, such amorphous calcium carbonate would enhance the cementing ability of carbonated cement powder in composite cement, and particularly obtain a higher reactivity in concrete. Thereto, said authors develop a process to prepare such amorphous calcium carbonate from carbonated recycled cement powder. Thereto, use was made of poly-aspartic acid and ethanol. The authors report that the maximum content of metastable calcium carbonate is 40.3% (conclusion 5). Metastable calcium carbonate (or MCC) herein includes amorphous calcium carbonate (or ACC) and vaterite (see page 7, 2^{nd} column).

However, the use of ethanol and poly-aspartic acid is needed in significant concentrations. The authors specify 50-70% ethanol and 10-15% polyaspartic acid. That is problematic for industrialization. Still, the 40% is the highest value, without any indication that this value can be readily repeated.

### SUMMARY OF THE INVENTION

It is therefore an object of the present invention to provide another method of preparing carbonated cementitious powder with significant amount of so-called metastable calcium carbonate, essentially amorphous calcium carbonate and vaterite.

It is a further object to provide a carbonated cementitious powder with a high content of metastable calcium carbonate.

According to a first aspect, the invention provides carbonated cementitious powder obtained from waste material, said carbonated cementitious powder comprising calcium carbonate and amorphous aluminosilica gel, wherein said calcium carbonate is present in at least three phases being amorphous calcium carbonate, vaterite and calcite, wherein the amorphous calcium carbonate is present in an amount of 20% to 50% by weight of total calcium carbonate, and the vaterite is present in an amount of 30% to 50% by weight of total calcium carbonate.

According to a second aspect, the invention provides a method of preparation of a carbonated cementitious powder, especially a carbonated powder in accordance with the first aspect of the invention, comprising carbonation of a milled or ground cementitious waste material in a reactor with an atmosphere of at least 80% relative humidity and a CO2 concentration of at least 20vol% and a temperature of at least 20°C, wherein said milled or ground cementitious waste is wetted prior to carbonation to a water to solids mass ratio in the range of 0.10 to 0.35 and said water to solids mass ratio is reduced during carbonation to at most 0.25 without intermediate increase of said water-solids ratio to a value of 0.30 or higher.

The invention is based on the surprising observation that the content of amorphous calcium carbonate turns out dependent on the water content used during carbonation. Generally, there are two different methods for carbonation, the wet method and the semi-dry method. In the wet method, CO2 gas is led through a water bath that contains the material to be carbonated. It will be understood that the water content cannot be modified in the wet method. In the so-called semi-dry method, the material to be carbonated is wetted and provided in a reactor containing CO2 gas and a humid atmosphere. Steam may be injected into the reactor for the provision of sufficient water content. This semi-dry method allows for setting the water content, by ensuring that an initial water content as a consequence of initial wetting is not too high, and by limiting or reducing the water content in the reactor in which carbonation is performed. Particularly, no intermediate wetting was applied, leading to a gradual reduction of the water content during the carbonation reaction. While intermediate wetting is easy in laboratory experiments in which material to be carbonated is exposed to a CO2 gas in an oven or other closed chamber, an industrial carbonation reactor working according to the semidry method would typically regulate the water content in the reactor. The reactor is for instance a fluidized bed reactor, but could alternatively be another reactor, such as for instance a cascade of a first and a second reactor with any feedbacks from the second reactor to the first reactor.

Particularly good results have been obtained with recycled fiber cement material as the cementitious waste material. It is believed that the recycled fiber cement material is very advantageous as raw material for generating carbonated cementitious powder with a high content of amorphous calcium carbonate in view of two aspects. First of all, such fiber cement material may contain or be composed of autoclave-cured cement material. During autoclave curing of fiber cement material silica reacts with portlandite from Portland cement in the presence of steam and under high pressure of several bars and high temperature of 100 to 200°C. This reaction leads to formation of crystalline calcium silicate hydrates, among which tobermorite, especially with an 11Å characteristic size, which tobermorite is deemed very important for strength development. Additional aluminium is added into the composition to ensure formation of adequate tobermorite during the autoclaving reaction. Such crystalline calcium silicate hydrates are not available in concrete waste. Autoclave-cured waste is typically characterized with a low molar calcium to silicon ratio. The Ca/Si ratio is for instance in the range of 0.5 to 1.3, preferably 0.8-1.2. In addition to pure autoclave-cured waste, a mixture of autoclave-cured waste and air-cured waste could be applied. In addition to fiber cement waste, autoclave-cured cementitious waste material is for instance available from calcium silicate products, typically used as fire resistant plates, as well as from aerated autoclaved concrete.

Secondly, much fiber cement products are made by means of processes in which initial thin films of monolayers are stacked to form a green sheet. The most prominent manufacturing processes are known as the Hatschek process and the flow-on process, with the Hatschek process being industrially used in Europe for corrugated sheets, roofing slates and façade panels for use in external claddings. These sheets therewith have a structured layerwise build up. It is not excluded that such layered structure contributes to generation of amorphous calcium carbonate during carbonation.

An apparent disadvantage of using fiber cement waste is the presence of organic fibers, of which the cellulose fibers are particularly entangled in the cementitious material in fiber cement products. However, it has turned out that such organic fibers may be removed partially or entirely. This may be done before or after carbonation. A manner to remove organic fibers partially is for instance known from WO2024/003277A1. A manner to remove organic fibers completely is the performance of a heat treatment at 360-450°C after carbonation, as has been proven to work adequately. This heat treatment will not have an impact on the phases in which calcium carbonate is present. A heat treatment may alternatively be applied directly after comminution, such as known from JP2006-273624A1.

The resulting carbonated cementitious powder is highly advantageous, particularly for use in composite cement and for use in concrete and mortar, either in the form of a pre-generated composite cement, or through mixing of the carbonated cementitious powder with cement, sand and any further components as required for the intended application.

These and other aspects of the invention will be further elucidated with reference to the examples. It is observed that any implementation and embodiment recited and/or discussed hereinafter or hereinabove is deemed to apply to any and all aspects of the invention, even if not mentioned so explicitly.

### EXAMPLES

### Example 1 - generation of carbonated cementitious powders

Air-cured fiber cement waste was obtained from the production of corrugated sheets within the Etex Group. The air-cured fiber cement waste was uncoated and free of reinforcement strips. It is not compressed. Autoclave-cured fiber cement waste was obtained as production waste within the Etex group. The waste material was compressed and had a density of 1.6 kg/dm3 and rendered hydrophobic by application of a hydrophobation agent at its surfaces. The waste material was first shredded, then crushed to an average size in the range of 0.5-2 cm and thereafter ground in a vertical roller mill apparatus. The used vertical roller mill apparatus included a vertical roller mill and an air classifier. Heated air was fed into the chamber of the vertical roller mill to dry the ground waste material and therewith remove humidity liberated from the (interior of the) fiber cement waste. Subsequently, the ground material was sieved using a vibrating tumbler sieve with a sieve mesh of 150µm.

Part of this material were subjected to carbonation. Thereto, the dried and milled powders were spread out in aluminium dishes (about 250 grams per dish). The weight of the dishes and the dry powders were measured, after which the dry powders were moistened with water under a mass ratio of water over dry powder of 0.35 was achieved. The moisture was applied by spraying. Thereafter, the weight of the powders was measured again. The powders thereafter were subjected to carbonation for 96 hours. This carbonation was performed in a carbonation chamber at a temperature of 60°C, a relative humidity RH of 90% and a constant CO2 inflow of 1.5 l/min to achieve a CO2 concentration of 18% by volume or higher.

Thereafter, CO2 concentration and relative humidity were changed to ambient conditions (less than 0.05vol% CO2), and the material remained another 24 hours at 60°C so as to dry. Finally, the carbonated and dried material was heated in an oven during 4 hours at 400°C.

It is believed by the inventors that the heat treatment results in removal of bound water, especially from a hydrated alumina-silica gel. This alumina-silica gel has pozzolanic activity and is formed upon carbonation together with CaCO3. Bound water is further removed during the heat treatment from remaining uncarbonated hydrated cement paste (among other minerals containing chemically bound water, such as hydrotalcite). Additionally, organic fibers get removed as will be discussed with reference to Tables 1 and 2.

### Example 2 - characterization of different samples

Generally, the CO₂-content in a sample can be derived from the total inorganic content (TIC), by multiplying the TIC with the ratio of molar mass of CO₂ to C (i.e. 3.667). The TIC can be found by measuring the total carbon content (TC) and the total organic carbon content (TOC) in a sample. The TIC is the difference of TC and TOC. As specified for instance in EN13639:2017, TOC and TC can be determined by oxidizing a sample at a temperature of 1300°C. In order to measure the TOC, the matter contributing to TIC needs to be removed first. This is done by treatment of a dried sample with strong acid, such as phosphoric acid (for instance in a 1:1 ratio). This determination of CO₂-content was performed for the cementitious powders 1 and 2 obtained in accordance with Example 2. Use in made of a carbon/sulfur analyzer EMIA-320V from Horiba to quantify TC and TOC, enabling calculation of TIC. The carbonation degree is determined as the CO2 degree relative to the theoretically maximum CO₂ degree as determined from the calcium and magnesium contents determined in XRF. The results are shown in Table 1.

The waste materials prepared in accordance with Example 1 were characterized for their carbon contents (TC, TIC, TOC), CO2, as well as cellulose fiber content and polyvinyl alcohol (PVA) fiber content, the latter only in the case of air-cured waste. Samples were taken after milling, after milling and sieving, after milling, sieving and carbonation and after milling, sieving, carbonation and the heat treatment at 400°C. The results are shown in Table 1 and Table 2.

**Table 1 -fiber content of waste materials, samples 1-2 and 5-6 being comparative**

| | wt% | | | | | Cellulose | PVA |
|---|---|---|---|---|---|---|---|
| 1* | Aircured waste | milling | - | - | - | 2.5 | 1.3 |
| 2* | | milling | sieving | - | - | 2.2 | 0.4 |
| 3 | | Milling | sieving | Carbonation | - | 2.3 | 0.11 |
| 4 | | Milling | sieving | Carbonation | 400 °C | 0.0 | 0.0 |
| 5* | Autoclave-cured waste | Milling | - | - | - | 6.1 | - |
| 6* | | Milling | sieving | - | - | 3.9 | - |
| 7 | | Milling | sieving | Carbonation | - | 3.5 | - |
| 8 | | Milling | sieving | carbonation | 400 °C | 0.0 | - |

**Table 2 - organic contents (TC, TIC, TOC) and CO2 content in powders from air-cured and autoclave-cured fiber cement waste materials**

| | wt% | | | | | TC | TOC | TIC | CO2 |
|---|---|---|---|---|---|---|---|---|---|
| 1* | Aircured fiber cement waste | Milling | - | - | - | 3.9 | 1.9 | 2.0 | 7.4 |
| 2* | | Milling | sieving | - | - | 3.5 | 1.2 | 2.2 | 8.2 |
| 3 | | Milling | sieving | Carbonation | - | 8.0 | 1.1 | 6.9 | 25.4 |
| 4 | | Milling | sieving | Carbonation | 400 °C | 7.2 | 0.07 | 7.1 | 26.1 |
| 5* | Autoclave-cured fiber cement waste | Milling | - | - | - | 3.7 | 2.8 | 1.0 | 3.5 |
| 6* | | Milling | sieving | - | - | 2.7 | 1.8 | 0.9 | 3.3 |
| 7 | | Milling | sieving | Carbonation | - | 5.4 | 1.6 | 3.8 | 13.9 |
| 8 | | Milling | sieving | carbonation | 400 °C | 3.8 | 0.12 | 3.7 | 13.5 |

**Table 3 density and BET specific surface area of the samples.**

| | wt% | | | | | Density (g/cm³) | BET surface area (m²/g) |
|---|---|---|---|---|---|---|---|
| 2* | Air-cured fiber cement waste | Milling | sieving | - | - | 2.22 | 10.3 |
| 3 | | Milling | sieving | Carbonation | - | 2.46 | 63.4 |
| 4 | | Milling | sieving | Carbonation | 400 °C | 2.57 | 50.8 |
| 6* | Autoclave-cured fiber cement waste | Milling | sieving | - | - | 2.43 | 21.0 |
| 7 | | Milling | sieving | Carbonation | - | 2.51 | 54.7 |
| 8 | | Milling | sieving | carbonation | 400 °C | 2.64 | 37.6 |

It is apparent from Table 1, that a heat treatment after carbonation removes all remaining organic fibers of whatever material, i.e. both cellulose and PVA. It is further apparent that cellulose fibers are not or hardly removed in the course of carbonation. Reasons for a decrease in cellulose fiber content during carbonation of autoclave-cured waste is currently not fully understood. It is believed that the cellulose fibers, or at least part thereof, is more anchored into the cement matrix. Cellulose fibers are generally refined prior to their use in fiber cement, leading to development of fiber strands.. Increases in - relative - contents during a process step, as shown in Tables 1 and 2 are deemed due to reductions in total amounts.

The data in Table 2 confirm the analysis on fiber content. Sieving results in reduction of the total organic carbon (TOC) content, and therefore also the total carbon (TC) content. Carbonation results in a major increase in the total inorganic carbon (TIC) content, and a slight reduction in the TOC content. The heat treatment reduces the organic carbon content to virtually zero, corresponding with complete removal of the fibers.

The data in Table 3 provide values for the density and the BET specific surface area of the samples 2-4 and 6-8. Density was measured by means of helium-pycnometry. BET surface area was measured in accordance with ISO 9277:2010. It is apparent that the heat treatment at 400°C after carbonation increases the density and reduces the specific surface area. The reduction in BET specific surface area was 20% for the heat treatment on carbonated air-cured fiber cement waste, and it was more than 30% (31%) for the heat treatment on carbonated autoclave-cured fiber cement waste. The higher loss of specific surface area may be related to the higher content of aluminosilica gel in carbonated cementitious powder from autoclave-cured waste. In fact, part of the loss is deemed to be due to loss of bound water, which is related to the aluminosilica gel rather than to the calcium carbonate in the carbonated cementitious powder. Still, the increase in specific surface area of the heat treated and carbonated waste relative to uncarbonated waste is significant. The increase in BET specific surface area for air-cured fiber cement waste is particularly remarkable.

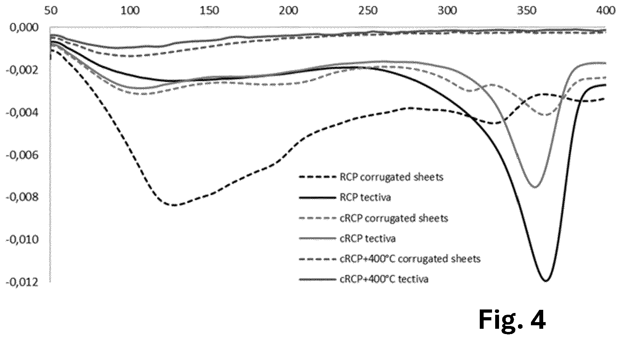

Fig. 4 is a graph obtained from DTG in which the heat loss in %/min is shown as a function of the temperature during the DTG experiment. Figure 4 shows the series of samples as shown in Table 2, 3 and 4. The dotted lines herein relate to air-cured fiber cement waste. The continuous lines relate to autoclave-cured fiber cement waste

### Example 3

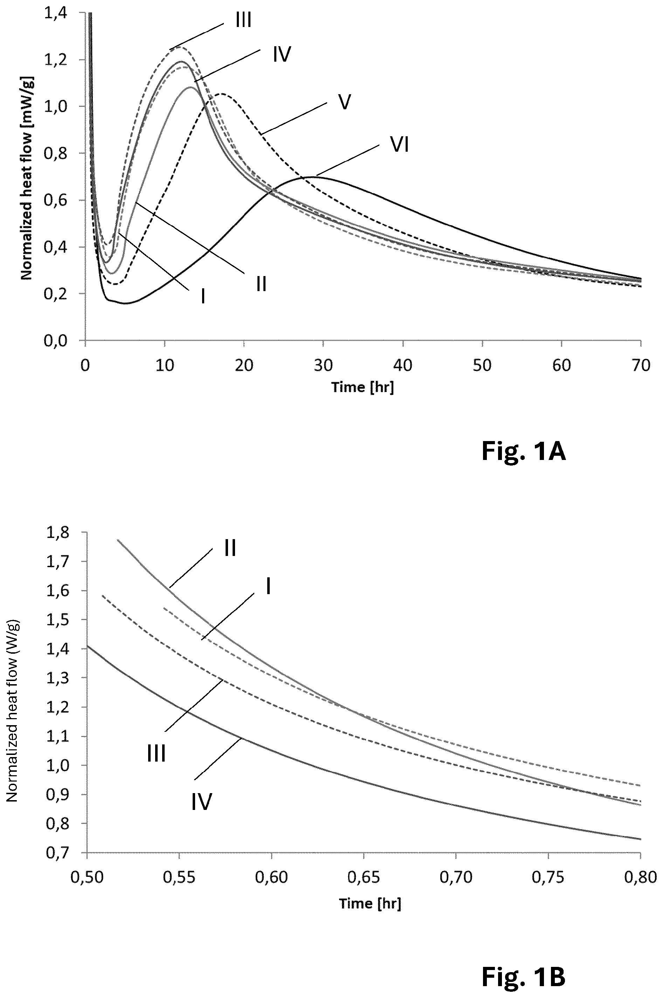

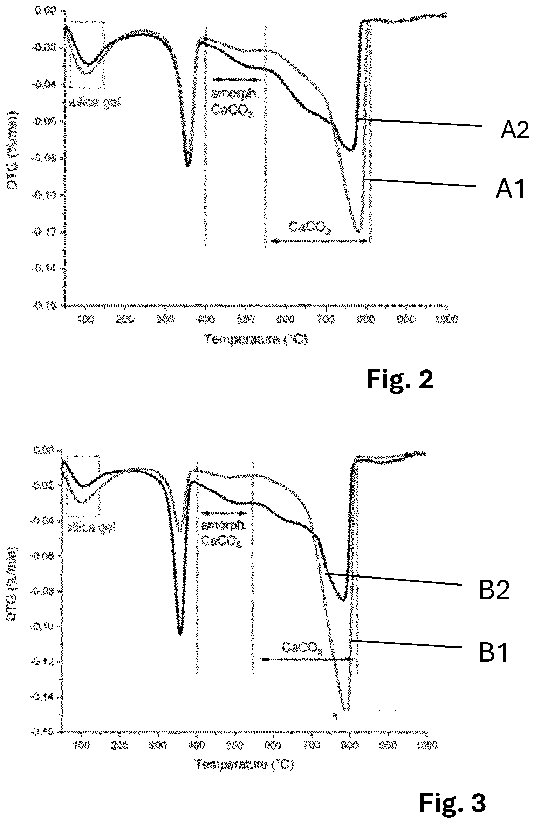

Mortars were prepared comprising in each case 80% by weight Portland cement type I (CEM I) and 20% by weight carbonated waste, by means of dry mixing. Water was added as needed to homogenize the mortar. Sample identification is given in Table 4. Normalized heat flow for the full period of the heat flow test are shown in Fig 1A. Normalized heat flow for the period from 0.50 hour to 0.80 hours are shown in Fig. 1B based on calorimetry. As is apparent from Fig. 1B, the samples that had undergone a heat treatment had lower heat flow than those that were not heat treated. This seems consistent with the results shown in Fig. 3 of WO2023/046498A1 for composite cements comprising 40% by weight of carbonated powder and 60% by weight of cement clinker, even though the absolute values are not one-to-one comparable. It is furthermore apparent from Fig. 1B that the decrease in heat flow is larger for samples from autoclave-cured waste than for the samples from air-cured waste.

**Table 4- mortar samples prepared with carbonated powders (I-IV) and uncarbonated powders (V-VI)**

| Sample | Carbonated waste type |
|---|---|
| I* | 3 |
| II | 4 |
| III* | 7 |
| IV | 8 |
| V* | 2 |
| VI* | 6 |

### Example 4

The carbonation as specified in Example 2 was repeated with the modification that the duration of carbonation was split up in five consecutive cycles of 24 hours. Two different conditions were applied. According to test condition 1 (samples A1 and B1, the powders were re-wetted to a water-solids ratio of 0.35 between each cycle. According to test condition 2 (samples A2 and B2), the powders were not rewetted. Samples A1 and A2 related to milled waste from autoclave-cured fiber cement waste material, which was a medium-density material. Samples B1 and B2 related to milled waste from autoclave-cured fiber cement waste material, which was a high-density material. Differences between the high density and the medium density material resided in the density, as obtained by means of a compression step at 230 kg/cm² (as compared to no compression step), as well as specific changes in composition, particularly in that the aluminium content was higher in the high-density material, and it contained a calcium silicate filler and pigment. Medium density refers herein to a material with a density in the range of 1.1 to below 1.5 kg/dm³, typically 1.2 to 1.4 kg/dm³. High density refers to a material with a density of at least 1.5 kg/dm³, typically up to 1.8 kg/dm³.

Table 5 shows results of the contents of calcium carbonate phases. These results were obtained from DTG (DifferentialThermo-Gravimetric analysis) measurements. The results for samples A1 and A2 are furthermore shown in Figure 2. The results for samples B1 and B2 are shown in Figure 3. Both Figure 2 and Figure 3 show the DTG response (in %/min) as a function of temperature.

**Table 5 - contents (in weight per cent) of different phases of calcium carbonate in dependence of wetting procedure and waste material. The first three rows show presence of different calcium carbonate phases in weight% relative to the total calcium carbonate content. The last row shows the amount of calcium carbonate relative to the total mass of the carbonated cementitious powder. The data are obtained from experiments in which no heat treatment was performed after carbonation. However, such heat treatment will not have any effect on the phase of the calcium carbonate, as these phases are stable up to much higher temperatures in the absence of water.**

| | A1 | A2 | B1 | B2 |
|---|---|---|---|---|
| Amorphous CaCO3 | 17.7 | 23.7 | 13.2 | 24.0 |
| Vaterite | 28.9 | 41.9 | 20.9 | 34.5 |
| Calcite | 53.4 | 34.4 | 65.9 | 41.5 |
| TOTAL mass% in carbonated powder | 37.6 | 37.5 | 35.8 | 37.1 |

It is apparent from the data in Table 5, that repetition of wetting (samplesA1, B1) reduces the content of amorphous calcium carbonate and vaterite and increases the calcite content. As a higher content of amorphous calcium carbonate and of vaterite are deemed beneficial for strength development in dry mixtures with clinker, Portland cement, optionally with sand and aggregate such as in mortar and concrete, the performance of carbonation without intermediate wetting is advantageous. Leaving out intermediate wetting in the labscale experiment corresponds to carbonation in semi-dry conditions without rewetting and wherein the water content of the reactor in which carbonation is performed is reduced. The water content in said reactor is preferably a water-to solids mass ratio of at most 0.35 and more preferably at most 0.30 or even at most 0.25. In the event that carbonation is carried out in a cascade reactor system with a first and a second reactor, the water-solids ratio is preferably reduced in the second reactor, so as to prevent crystallization from amorphous calcium carbonate to calcite.

## Claims

1. Carbonated cementitious powder obtained from waste material, said carbonated cementitious powder comprising calcium carbonate and amorphous aluminosilica gel, wherein said calcium carbonate is present in at least three phases being amorphous calcium carbonate, vaterite and calcite, wherein the amorphous calcium carbonate is present in an amount of 20% to 50% by weight of total calcium carbonate, and the vaterite is present in an amount of 30% to 50% by weight of total calcium carbonate.

2. Carbonated cementitious powder as claimed in claim 1, wherein amorphous calcium carbonate is present in an amount of 21% to 30% by weight of total calcium carbonate.

3. Carbonated cementitious powder as claimed in claim 1 or 2, wherein powder is **characterized in** a molar calcium to silicon (Ca/Si) ratio in the range of 0.5 to 1.3, preferably 0.8-1.2.

4. Carbonated cementitious powder as claimed in any of the claims 1-3, further comprising cellulose fibers.

5. Carbonated cementitious powder as claimed in any of the claims 1-3, wherein said cementitious powder is obtained by performing a heat treatment after carbonation to remove organic fibers from the cementitious powder.

6. Carbonated cementitious powder as claimed in any of the preceding claims, wherein said amorphous aluminosilica gel is present in an amount of at least 40wt% based on total dry weight of the carbonated cementitious powder.

7. Carbonated cementitious powder as claimed in any of the preceding claims, wherein the amorphous aluminosilica gel comprises at least 75wt% of SiO2.

8. Method of preparation of a carbonated cementitious powder as claimed in any of the preceding claims 1-7, comprising carbonation of a milled or ground cementitious waste material in a reactor with at atmosphere of at least 80% relative humidity and a CO2 concentration of at least 20vol%, wherein said milled or ground cementitious waste is wetted prior to carbonation to a water to solids mass ratio in the range of 0.10 to 0.35 and said water to solids mass ratio is reduced during carbonation to at most 0.25 without intermediate increase of said water-solids ratio to a value of 0.30 or higher.

9. Method as claimed in claim 8, wherein said milled or ground cementitious waste comprises autoclave-cured waste.

10. Method as claimed in claim 8 or 9, wherein said milled or ground cementitious waste comprises fiber cement waste.

11. Method as claimed in any of the preceding claims 8 to 10,wherein said carbonation of said cementitious waste is started during milling or grinding of said cementitious waste.

12. Method as claimed in any of the preceding claims 8 to 11, wherein said carbonation occurs in alkaline environment.

13. Method as claimed in claim 12, wherein said alkaline environment is provided through wetting with an alkaline aqueous medium.

14. Composite cement comprising cement and/or cement clinker and the carbonated cementitious powder as claimed in any of the claims 1-7 as a supplementary cementitious material

15. Concrete or mortar composition comprising cement, sand and optionally aggregate and the carbonated cementitious powder as claimed in any of the claims 1-7.
